# EUROPÄISCHE PATENTSCHRIFT

(11) **EP 2 989 355 B1**
(45) Veröffentlichungstag und Bekanntmachung des Hinweises auf die Patenterteilung: **08.05.2019**
(21) Anmeldenummer: 14711509.1
(22) Anmeldetag: 19.03.2014
(51) Int. Cl.: F01N 13/08, F16J 15/06, F16J 15/08

(54) **FLACHDICHTUNG**
FLAT SEAL
JOINT PLAT

(30) Priorität: 22.04.2013 DE 102013104068
(43) Veröffentlichungstag der Anmeldung: 02.03.2016
(73) Patentinhaber: ElringKlinger AG, 72581 Dettingen (DE)
(72) Erfinder: KULLEN, Wilhelm, 72584 Hülben (DE)
(74) Vertreter: Hoeger, Stellrecht & Partner Patentanwälte mbB
(86) Internationale Anmeldenummer: PCT/EP2014/055548
(87) Internationale Veröffentlichungsnummer: WO 2014/173591

(56) Entgegenhaltungen:
- EP-A1- 1 985 898
- WO-A2-2009/098063
- DE-A1- 19 638 682
- DE-A1-102004 049 292
- DE-U1-202011 103 439
- US-A1- 2006 232 017
- US-A1- 2009 072 493
- US-A1- 2012 227 698

## Beschreibung

Die Erfindung betrifft eine metallische Flachdichtung zum Einbau in einen Dichtspalt zwischen einander zugewandten Dichtflächen von miteinander verbundenen Heißgas-führenden Bauteilen, welche eine bei eingebauter Dichtung gepresste Dichtungsplatte mit mehreren übereinander angeordneten metallischen Dichtungslagen und mehreren Heißgas-Durchlassöffnungen für einander benachbarte Heißgasströme aufweist, wobei die Dichtungsplatte zwischen mindestens zwei einander benachbarten Heißgas-Durchlassöffnungen einen die Letzteren in einer Draufsicht auf die Dichtungsplatte voneinander trennenden, bei eingebauter Dichtung gepressten Dichtungsplattensteg besitzt.

Insbesondere betrifft die Erfindung Dichtungen für den Abgasbereich eines Verbrennungsmotors, vorzugsweise Flanschdichtungen an einem Abgasturbolader, wie Dichtungen zwischen einem Abgaskrümmer und einem Abgasturbolader oder zwischen den Ladern eines mehrstufigen Abgasturboladersystems. Speziell betrifft die Erfindung eine Flachdichtung für den Anschluss eines Twin-Scroll Turboladers.

Unter einer metallischen Flachdichtung versteht der Dichtungsfachmann auch Dichtungen, welche nicht rein metallisch sind, sondern nur ganz überwiegend aus metallischen Materialien bestehen; insbesondere kann eine solche Flachdichtung mindestens eine Dichtungslage enthalten, welche ein- oder beidseitig vollflächig oder partiell mit einer nicht-metallischen Beschichtung versehen ist, beispielsweise einer reibungs- oder verschleißmindernden Beschichtung.

Bei Abdichtungssystemen mit bekannten Flachdichtungen der eingangs definierten Art zwischen einander zugewandten Dichtflächen von Heißgas-führenden metallischen Bauteilen, in welchen die Bauteile mittels die Letzteren und die Flachdichtung durchsetzenden Montageschrauben oder anderer Verspannungselemente gegeneinander gezogen und mit ihren Dichtflächen gegen die Flachdichtung angepresst werden, besteht das im Folgenden beschriebene Problem, welches sich gerade bei im Abgasbereich von Verbrennungsmotoren liegenden Abdichtungssystemen als besonders gravierend erwiesen hat:
Für die Heißgasströme weisen die Bauteile einander benachbarte Heißgaskanäle auf, welche in die Bauteil-Dichtflächen münden und dort Dichtflächenöffnungen bilden, die über die Heißgas-Durchlassöffnungen der Flachdichtung miteinander kommunizieren - im Allgemeinen sind die in Strömungsrichtung eines Gasstroms hintereinander liegenden Dichtflächenöffnungen der Bauteile und die dazwischen liegende Heißgas-Durchlassöffnung der Flachdichtung in Form und Größe identisch gestaltet und liegen deckungsgleich übereinander. Jedes Bauteil weist zwischen einander benachbarten Heißgaskanälen jeweils eine Trennwand auf, welche im Schnitt (längs einer die Kanallängsachsen enthaltenden Ebene) mindestens in einem an die Dichtflächenöffnungen angrenzenden Bauteilbereich stegartig gestaltet ist, weshalb diese Trennwände im Folgenden als Bauteilstege bezeichnet werden sollen. Diese Bauteilstege sind so gestaltet, dass sie bei eingebauter Flachdichtung mit ihren einander zugewandten Stirnbereichen gasdicht gegen die Flachdichtung angepresst werden sollten, und zwar gegen mindestens einen zwischen zwei Bauteilstegen liegenden Dichtungsplattensteg.

Bei Aufnahme des Betriebs werden die zwischen einander benachbarten Heißgaskanälen befindlichen inneren Bauteilstege rascher und im Laufe des Betriebs stärker erhitzt als periphere Bauteilbereiche, in denen die Bauteildichtflächen zwar gleichfalls gegen die Flachdichtung angepresst werden, jedoch ist die Betriebstemperatur dieser peripheren Bauteilbereiche deutlich geringer als diejenige der zwischen einander benachbarten Heißgaskanälen liegenden inneren Bauteilstege, so dass die axiale Wärmeausdehnung dieser Bauteilstege (Ausdehnung senkrecht zur Dichtungsplattenebene der Flachdichtung) deutlich größer ist als diejenige der peripheren Bauteilbereiche, welche von den Heißgaskanälen aus nur einseitig mit Wärme beaufschlagt werden, während jeder innere Bauteilsteg auf seinen beiden Seiten durch die Heißgase mit Wärme beaufschlagt wird. Infolgedessen sind im Betrieb die zwischen den Bauteil-dichtflächen und der Flachdichtung auftretenden, senkrecht zur Dichtungsplattenebene orientierten Pressungskräfte im Bereich eines Dichtungsplattenstegs und der diesen zwischen sich aufnehmenden inneren Bauteilstege weitaus größer als in anderen, an die Heißgas-Durchlassöffnungen angrenzenden Dichtungsplattenbereichen, und gleichzeitig wird das Maß der Verspannung in den peripheren Bauteilbereichen und außerhalb der Gesamtheit der Heißgas-Durchlassöffnungen der Dichtungsplatte im Vergleich zum Maß der Verspannung vor Aufnahme des Betriebs deutlich reduziert.

Bei den sehr hohen, während des Betriebs in den Heißgasbereichen, insbesondere in Abgasbereichen auftretenden Temperaturen wird der Werkstoff der Bauteile unter hohen Pressungskräften plastifiziert, so dass die vorstehend beschriebenen, gegen die Flachdichtung angepressten Stirnbereiche der inneren Bauteilstege plastisch verformt werden, was zur Folge hat, dass nach einer Betriebsbeendigung beim Erkalten des Abdichtungssystems Spalte zwischen einem Dichtungsplattensteg und den diesen zwischen sich aufnehmenden inneren Bauteilstegen entstehen und auch nach einer Wiederaufnahme des Betriebs einander benachbarte Heißgaskanäle hinsichtlich eines Gasübertritts nicht mehr in dem Maß voneinander getrennt sind, wie dies vor einer erstmaligen Inbetriebnahme des Abdichtungssystems der Fall war.

Zu der vorstehenden Erscheinung kommen bei herkömmlichen Abdichtungssystemen noch die folgenden Nachteile hinzu: Durch die im Bereich eines Dichtungsplattenstegs auftretenden, vorstehend beschriebenen hohen Pressungskräfte kann auch die Flachdichtung im Bereich eines Dichtungsplattenstegs beschädigt werden, und außerdem besteht das Risiko einer Überlastung der außerhalb der Gesamtheit der Heißgaskanäle liegenden Verspannungselemente des Abdichtungssystems, bei denen es sich üblicherweise um Montageschrauben handelt, beispielsweise aber auch um einen sogenannten V-Bond handeln kann.

Um zu vermeiden, dass es aufgrund der vorstehend beschriebenen und bereichsweise unterschiedlichen Wärmeausdehnungen zu Beschädigungen an den Bauteilen, der Flachdichtung und/oder den Verspannungselementen des Abdichtungssystems kommt, wurden schon Abdichtungssysteme eingesetzt, in denen im Bereich des von der Flachdichtung abzudichtenden sogenannten Dichtspalts zwischen den Bauteil-Dichtflächen von Anfang an auf eine wenn auch nur einigermaßen gasdichte Trennung einander benachbarter Heißgasströme verzichtet wurde, so dass sich die Bauteile zwischen ihren Heißgaskanälen in axialer Richtung frei ausdehnen können und im Abdichtungssystem-Dichtspalt zwischen einander benachbarten Heißgaskanälen ein Innenspalt in Kauf genommen wird. Da in einem solchen Abdichtungssystem einander benachbarte Gasströme jedoch nur sehr mangelhaft voneinander getrennt werden, wirkt sich dies beispielsweise im Abgasstrang eines Verbrennungsmotors nachteilig auf die Funktion eines Abgasturboladers aus.

Aus der DE 10 2004 049 292 A ergibt sich eine mehrlagige metallische Zylinderkopfdichtung mit eine Dichtungsplatte bildenden drei Dichtungslagen. In der Dichtungsplatte bilden die Dichtungslagen ein Rückschlagventil, welches einander benachbarte Durchlassöffnungen für einander benachbarte Fluidströme aufweist. Bei eingebauter Zylinderkopfdichtung befindet sich das Rückschlagventil in einem nicht-gepressten Bereich der Dichtungsplatte, in welchem die Durchlassöffnungen des Rückschlagventils im Motorbetrieb von Kühlwasser durchströmt werden. Zwischen einander benachbarten Durchlassöffnungen des Rückschlagventils bildet die Dichtungsplatte jeweils einen Dichtungsplattensteg, in dessen Bereich die beiden äußeren Dichtungslagen der Zylinderkopfdichtung jeweils einen entsprechenden Steg aufweisen, während die mittlere Dichtungslage nur eine einzige Öffnung und keinen entsprechenden Steg bildet.

Der Erfindung lag die Aufgabe zugrunde, eine Flachdichtung für ein Abdichtungssystem der eingangs definierten Art vorzuschlagen, welche im Dichtspalt eine verhältnismäßig gute gasmäßige Trennung einander benachbarter Heißgasströme ermöglicht, aber auch das Risiko einer Beschädigung der Bauteile und/oder der Flachdichtung im Zuge des Betriebs des Abdichtungssystems beseitigt oder zumindest minimiert.

Erfindungsgemäß lässt sich diese Aufgabe mit einer mehrlagigen metallischen Flachdichtung der eingangs erwähnten Art lösen, bei der die Summe der Metalldicken der übereinander angeordneten Dichtungslagen der Dichtungsplatte im Bereich eines dem gasmäßigen Trennen von Heißgas-Durchlassöffnungen durchströmenden und einander benachbarten Heißgasströmen im Dichtspalt dienenden Dichtungsplattenstegs oder gegebenenfalls mehrerer oder aller Dichtungsplattenstege kleiner ist als in an die Heißgas-Durchlassöffnungen angrenzenden anderen Dichtungsplattenbereichen, wobei jedoch auch im Bereich dieses Dichtungsplattenstegs die Dichtungsplatte von mindestens einer Dichtungslage gebildet wird.

Eine gemäß dem vorstehend beschriebenen Grundprinzip der Erfindung gestaltete Flachdichtung lässt es zu, dass sich die die Flachdichtung zwischen sich aufnehmenden Bauteile zu beiden Seiten eines Dichtungsplattenstegs und damit in den Bereichen ihrer inneren Bauteilstege im Betrieb des Abdichtungssystems in axialer Richtung so ausdehnen können, dass weder diese Bauteilstege
teilstege plastisch verformt werden noch die Flachdichtung im Bereich ihres Dichtungsplattenstegs oder ihrer Dichtungsplattenstege beschädigt wird und/oder die Verspannungselemente des Abdichtungssystems überlastet werden. Dennoch lässt sich eine erfindungsgemäße Flachdichtung so gestalten, dass sich mit ihr im Dichtspalt zwischen den Bauteil-Dichtflächen einander benachbarte Heißgasströme so gut voneinander trennen lassen, wie dies für eine gute Funktion des Gesamtsystems erforderlich ist, insbesondere für die Funktion einer Abgasturbolader-Einrichtung, denn hierzu bedarf es nur einer Abstimmung der Größe der bereichsweisen Reduzierung der Summe der Materialdicken der übereinander angeordneten Dichtungslagen der Dichtungsplatte im Bereich eines Dichtungsplattenstegs und derjenigen axialen Wärmeausdehnung der inneren Bauteilstege, welche noch keine oder zumindest keine nennenswerte plastische Verformung der Bauteilstege zur Folge hat, einerseits und einem für die Funktion des Gesamtsystems ausreichenden Abdichtvermögen der Flachdichtung zwischen zwei einander im Dichtspalt benachbarten Heißgasströmen andererseits.

Das vorstehend definierte Grundprinzip der Erfindung lässt sich vorzugsweise mit einer der beiden folgenden Maßnahmen oder einer Kombination dieser Maßnahmen realisieren, wobei jede dieser Maßnahmen eine mehrlagige erfindungsgemäße Flachdichtung voraussetzt, bei der mindestens eine der Dichtungslagen im Bereich mindestens eines Dichtungsplattenstegs einen Dichtungslagensteg aufweist, welcher in einer Draufsicht auf die Dichtungsplatte die beiden dem Dichtungsplattensteg benachbarten Heißgas-Durchlassöffnungen voneinander trennt:
Gemäß einer ersten Realisierungart ist eine Dichtungslage (bei einer Dichtung mit drei oder mehr Dichtungslagen gegebenenfalls aber auch noch eine weitere Dichtungslage) im Bereich mindestens eines Dichtungsplattenstegs stegfrei, um im Bereich dieses Dichtungsplattenstegs die Summe der Materialdicken der Dichtungslagen zu reduzieren.

Gemäß einer zweiten Realisierungsart weist mindestens eine Dichtungslage (bei einer Dichtung mit drei oder mehr Dichtungslagen gegebenenfalls aber auch noch eine weitere Dichtungslage) eine derart variierende Materialdicke auf, dass die Dichtungslage im Bereich mindestens eines Dichtungslagenstegs dieser Dichtungslage eine Materialdicke hat, welche kleiner ist als ihre Materialdicke in den anderen, an die Heißgas-Durchlassöffnungen angrenzenden Bereichen dieser Dichtungslage, so dass die Summe der Materialdicken der Dichtungslagen im Bereich dieses Dichtungslagenstegs reduziert wird. Dabei muss die Materialdicke dieses Dichtungslagenstegs nicht überall dieselbe, sondern nur kleiner sein als in anderen Bereichen dieser Dichtungslage, welche an die Heißgas-Durchlassöffnungen angrenzen.

Bei bevorzugten Ausführungsformen der erfindungsgemäßen Flachdichtung ist die Summe der Materialdicken der Dichtungslagen im Bereich eines Dichtungsplattenstegs insbesondere um 25 bis 75 % kleiner als in anderen, an die Heißgas-Durchlassöffnungen angrenzenden Dichtungsplattenbereichen. Eine Dickenreduzierung der Dichtungsplatte im oberen Bereich des vorgenannten Bereichs betrifft erfindungsgemäße Flachdichtungen mit einer sogenannten Stopperlage oder einer sogenannten Trägerlage, welche üblicherweise aus wesentlich dickeren Blechen als sogenannte Funktionslagen hergestellt werden; dabei wird dann erfindungsgemäß im Bereich mindestens eines Dichtungsplattenstegs die Stopper- bzw. Trägerlage ausgespart, so dass diese dort stegfrei ist.

Vorsorglich sei darauf hingewiesen, dass (in einer Draufsicht auf die Dichtungsplatte bzw. die betreffende Dichtungslage) ein Dichtungsplattensteg bzw. ein Dichtungslagensteg nicht überall gleich breit und/oder gerade sein muss, sondern beispielsweise in seinen Längsendbereichen breiter als zwischen diesen sein und/oder gekrümmt sein oder einen winkelförmigen Verlauf haben kann.

Außerdem ist im Zusammenhang mit der vorstehend beschriebenen ersten Realisierungsart noch Folgendes zu bemerken: Bei einer mehrlagigen erfindungsgemäßen Flachdichtung haben die Dichtungslagen den Heißgas-Durchlassöffnungen der Dichtungsplatte entsprechende Lagenöffnungen für den Durchtritt der Heißgase, sieht man von der Dichtungslage (gegebenenfalls den Dichtungslagen) ab, welche der örtlichen Reduzierung der Materialdicke der Dichtungsplatte dient - in dieser Dichtungslage bilden zwei sonst durch einen Dichtungslagensteg voneinander getrennte Lagenöffnungen eine einzige Öffnung.

Schließlich sei erwähnt, dass bei einer erfindungsgemäßen Flachdichtung mit einer mehr als zwei Dichtungslagen umfassenden Dichtungsplatte eine erfindungsgemäß gestaltete Dichtungslage eine Außenlage oder eine Innenlage der Dichtungsplatte bilden kann.

Bei bevorzugten Ausführungsformen der erfindungsgemäßen Flachdichtung ist mindestens eine der Dichtungslagen, und zwar insbesondere eine Außenlage oder jede Außenlage der Dichtungsplatte, mit einer in einer Draufsicht auf die Dichtungsplatte die Gesamtheit der Heißgas-Durchlassöffnungen vollständig umschließenden Abdichtsicke versehen, bei der es sich um eine sogenannte Vollsicke oder um eine sogenannte Halbsicke handeln kann. Dadurch wird eine optimale Abdichtung des durch die Flachdichtung abzudichtenden Dichtspalts gegen einen Austritt von Heißgas aus dem Abdichtungssystem erzielt.

Die Erfindung betrifft zwar metallische Flachdichtungen, eingangs wurde aber bereits darauf hingewiesen, dass eine von der Erfindung betroffene Flachdichtung nicht rein metallisch sein muss, sondern beispielsweise mit einer nicht-metallischen Beschichtung versehen sein kann. Eine für den Heißgasbereich, nämlich den Abgasbereich eines Verbrennungsmotors gestaltete erfindungsgemäße Flachdichtung kann dabei mindestens eine Dichtungslage enthalten, welche ein- oder beidseitig vollflächig oder partiell mit einer Beschichtung versehen ist, die aus Bornitrid-Partikeln und einem Harz als Bindemittel besteht. Eine für den Abgasbereich eines Verbrennungsmotors gestaltete erfindungsgemäße Flachdichtung zeichnet sich aber dadurch aus, dass sie frei ist von elastomeren und/oder duroplastischen Dichtungsmaterialien.

Insbesondere zeichnet sich eine für den Abgasbereich eines Verbrennungsmotors gestaltete erfindungsgemäße Flachdichtung, wenn sie mindestens eine Beschichtung aufweist, dadurch aus, dass es sich bei dem mindestens einen Beschichtungsmaterial um einen Werkstoff handelt, welcher bei den Betriebstemperaturen der Flachdichtung von meist mehr als 500 °C und insbesondere von Temperaturen im Bereich von mehr als 600 °C bis 900 °C, vorzugsweise bis 1.200 °C eine noch wirksame Beschichtung gewährleistet, insbesondere eine reibungs- und/oder verschleiß-mindernde Beschichtung oder eine Beschichtung mit einer gewissen wenn auch nicht vollkommenen abdichtenden Wirkung.

Mit Vorteil wird eine erfindungsgemäße Flachdichtung so gestaltet, dass der Dichtungsplattensteg mit der Dichtungsplatte einstückig ist.

Vor allem bei einer für den Abgasbereich eines Verbrennungsmotors gestalteten erfindungsgemäßen Flachdichtung sollte der Dichtungsplattensteg unmittelbar an die einander benachbarten Heißgas-Durchlassöffnungen angrenzen, was insbesondere bedeutet, dass der Dichtungsplattensteg nicht als Halter für separat hergestellte metallische Dichtelemente dient, welche die Heißgas-Durchlassöffnungen umschließen.

Nach dem Grundkonzept der vorliegenden Erfindung ist die Summe der Materialdicken der Dichtungslagen im Bereich eines Dichtungsplattenstegs kleiner als in anderen, an die Heißgas-Durchlassöffnungen angrenzenden Dichtungsplattenbereichen. In diesem Zusammenhang gilt für bevorzugte Ausführungsformen der erfindungsgemäßen Flachdichtung das Folgende, und zwar jeweils einzeln oder in beliebiger Kombination:
Bei bevorzugten Ausführungsformen ist unter der Summe der Materialdicken der Dichtungslagen die Summe der metallischen Materialdicken zu verstehen, wozu gegebenenfalls auch die Dicke einer metallischen Beschichtung oder mehrerer metallischer Beschichtungen zählt - für im Abgasbereich einzusetzende Flachdichtungen werden beispielsweise Beschichtungen aus Sinterbronze verwendet.

Bei besonders vorteilhaften Ausführungsformen der Erfindung ist die Summe der Metall-Materialdicken der Dichtungslagen im Bereich eines Dichtungsplattenstegs und insbesondere über die gesamte Länge des Dichtungsplattenstegs kleiner als in allen anderen, an die Heißgas-Durchlassöffnungen angrenzenden Dichtungsplattenbereichen.

Im Hinblick auf eine im Folgenden geschilderte Weiterentwicklung der erfindungsgemäßen Flachdichtung sei darauf hingewiesen, dass zumindest bei bevorzugten Ausführungsformen der erfindungsgemäßen Flachdichtung die Metall-Materialstärke eines Dichtungsplattenstegs die Materialdicke mindestens eines Stegbereichs ist, welcher bei eingebauter Flachdichtung zwischen zur Dichtungsplattenebene parallelen Bauteilflächen eingespannt ist. Für den Fall, dass mindestens eine Dichtungslage im Bereich eines Dichtungsplattenstegs im Schnitt quer zur Steg-Längsrichtung Dickenunterschiede aufweist, ist unter der Summe der Metall-Materialdicken der Dichtungslagen im Bereich eines Dichtungsplattenstegs die maximale Summe der Metall-Materialdicken der Dichtungslagen im Bereich des Dichtungsplattenstegs zu verstehen.

Ferner soll bei bevorzugten Ausführungsformen der Erfindung unter der Metall-Materialdicke einer Dichtungslage und insbesondere jeder Dichtungslage im Bereich mindestens eines von der Dichtungslage gebildeten Dichtungslagenstegs die maximale Metall-Materialdicke der Dichtungslage im Bereich des Dichtungslagenstegs verstanden werden.

Im Sinne einer weiteren Verbesserung der Trennung der in einander benachbarten Heißgaskanälen der Bauteile geführten Gasströme im Bereich des Dichtspalts voneinander wird Folgendes empfohlen:
Bei einer Flachdichtung mit der vorstehend beschriebenen ersten Art der Realisierung der vorliegenden Erfindung wird ein Dichtungslagensteg, vorzugsweise jeder Dichtungslagensteg mit mindestens einem länglichen, sich in Längsrichtung des Dichtungslagenstegs erstreckenden Gassperrelement versehen, welches über die den Dichtungslagensteg aufweisende Dichtungslage übersteht und vorzugsweise so gestaltet ist, dass es über mindestens eine der beiden Hauptoberflächen dieser Dichtungslage quer (nicht unbedingt senkrecht) zur Dichtungsplattenebene so vorspringt, dass es bei eingebauter Flachdichtung insbesondere über seine ganze Länge gegen einen Bauteilsteg möglichst gut abdichtend anliegt. Bei bevorzugten Ausführungsformen der erfindungsgemäßen Flachdichtung ist der mit dem Dichtungslagensteg versehenen ersten Dichtungslage benachbart mindestens eine weitere Dichtungslage vorgesehen, welche im Bereich des Dichtungslagenstegs der ersten Dichtungslage stegfrei ist und durch die das Gassperrelement bei eingebauter und gepresster Flachdichtung hindurchtritt.

Bei einer erfindungsgemäßen Flachdichtung mit einem oder mehreren solchen Gassperrelementen, welche über den Dichtungslagensteg überstehen, versteht es sich im Hinblick auf das durch die vorliegende Erfindung gelöste Problem von selbst, dass die Materialdicke eines solchen Gassperrelements bei der Summe der Materialdicken der Dichtungslagen außer Betracht zu bleiben hat.

Bei besonders vorteilhaften Ausführungsformen der erfindungsgemäßen Flachdichtung weist der Dichtungslagensteg im Bereich des mindestens einen Gassperrelements einen im Wesentlichen L-, V-, U- oder Z-förmigen Querschnitt auf - bei einem V- oder U-förmigen Querschnitt bildet der Dichtungslagensteg zwei in derselben Richtung vorspringende Gassperrelemente, bei einem Z-förmigen Querschnitt zwei Gassperrelemente, welche in entgegengesetzte Richtungen vorspringen; dann kann der mit mindestens einem Gassperrelement versehene Dichtungslagensteg vorzugsweise so gestaltet werden, dass das Gassperrelement bei eingebauter Flachdichtung quer zu seiner Längsrichtung und parallel zur Dichtungsplattenebene insbesondere elastisch ausgelenkt und vorgespannt ist, um sein Abdichtvermögen noch weiter zu verbessern.

Bei Flachdichtungen, mit denen die Erfindung in der vorstehend beschriebenen zweiten Art realisiert wird, das heißt mit einem dickenreduzierten Dichtungslagensteg, kann es empfehlenswert sein, diesen Dichtungslagensteg mit mindestens einer länglichen, sich in Längsrichtung des Dichtungslagenstegs erstreckenden Sicke zu versehen, welche in gepresstem Zustand, das heißt bei eingebauter Flachdichtung, ein Gassperrelement bildet.

Weist die mit dem mindestens einen Gassperrelement versehene Dichtungslage eine die Gesamtheit der Heißgas-Durchlassöffnungen vollständig umschließende Abdichtsicke auf, endet dieses Gassperrelement an seinen beiden Längsenden im Abstand von dieser Abdichtsicke, weil eine Einmündung des Gassperrelements in die Abdichtsicke je nach Sickenart unter Umständen nicht realisierbar wäre. Es hat sich jedoch gezeigt, dass das Gassperrelement auch dann einander im Dichtspalt benachbarte Heißgasströme zumindest so voneinander trennt, dass ein Gasaustausch zwischen den Heißgasströmen hinreichend stark behindert wird.

Aber auch dann, wenn ein nicht-dickenreduzierter Dichtungslagensteg im Bereich der von ihm gebildeten Gassperrelemente einen im Wesentlichen U-förmigen Querschnitt aufweist, kann es empfehlenswert sein, den Boden des U-förmigen Querschnitts mit einer solchen Sicke zu versehen, welche über diesen Boden nach außen vorspringt, um dann bei eingebauter Flachdichtung mit dieser Sicke im Dichtspalt einen Gasaustausch zwischen einander benachbarten Heißgasströmen stark zu behindern; dabei hat diese Sicke insbesondere eine im Vergleich zu einer üblichen Abdichtsicke nur minimale Höhe, das heißt es handelt sich um eine sogenannte Mikrosicke.

Die Erfindung betrifft auch ein Abdichtungssystem mit einer metallischen Flachdichtung, welche zwischen einander zugewandten Dichtflächen von miteinander verbundenen Bauteilen eingespannt ist, deren jedes mindestens zwei benachbart zueinander verlaufende, in seine Bauteil-Dichtfläche mündende Heißgaskanäle enthält, zwischen denen im Bauteil eine die Heißgaskanäle voneinander trennende Trennwand vorgesehen ist, die einen an der Bauteil-Dichtfläche endenden Bauteilsteg bildet und sich im Heißgaskanal über eine Länge erstreckt, welche größer und vorzugsweise um ein Vielfaches größer ist als die in der Bauteil-Dichtfläche gemessene Länge des Bauteilstegs, wobei die Flachdichtung eine Dichtungsplatte mit mindestens zwei übereinander angeordneten metallischen Dichtungslagen und mehrere Heißgas-Durchlassöffnungen aufweist, über welche die Heißgaskanäle der Bauteile miteinander kommunizieren, und wobei die Dichtungsplatte zwischen mindestens zwei einander benachbarten Heißgas-Durchlassöffnungen einen die Letzteren voneinander trennenden Dichtungsplattensteg besitzt, der zwischen zwei Bauteilstegen der die Flachdichtung zwischen sich aufnehmenden Bauteile angeordnet, insbesondere eingespannt ist.

Erfindungsgemäß zeichnet sich ein solches Abdichtungssystem dadurch aus, dass die Summe der Materialdicken der Dichtungsplatten im Bereich eines Dichtungsplattenstegs kleiner als in anderen, an die Heißgas-Durchlassöffnungen angrenzenden Dichtungsplattenbereichen ist, und dass die Dichtungsplatte auch im Bereich dieses Dichtungsplattenstegs zumindest eine Dichtungslage aufweist.

Auch für die Flachdichtung eines solchen Abdichtungssystems gelten die obigen Ausführungen betreffend die Gestaltung erfindungsgemäßer Flachdichtungen.

Weitere Merkmale, Vorteile und Einzelheiten der Erfindung ergeben sich aus den beigefügten Ansprüchen und/oder aus den beigefügten Zeichnungen sowie der nachfolgenden Beschreibung dieser Zeichnungen, in denen außer dem Stand der Technik bevorzugte Ausführungsformen der Erfindung dargestellt wurden; in den Zeichnungen zeigen:
- Fig. 1:: einen Schnitt durch ein herkömmliches Abdichtungssystem mit zwei eine zweilagige metallische Flachdichtung zwischen sich aufnehmenden Bauteilen;
- Fig. 2:: eine Draufsicht auf eine metallische Flachdichtung, welche in das Abdichtungssystem gemäß Fig. 1 eingebaut werden könnte, und
- Fig. 3A und 3B:: Schnitte nach der Linie 3-3 in Fig. 2 durch zwei Ausführungsformen dieser Flachdichtung;
- Fig. 4:: eine isometrische Darstellung einer bevorzugten Ausführungsform einer erfindungsgemäßen Flachdichtung;
- Fig. 5:: eine Draufsicht auf die in Fig. 4 gezeigte Flachdichtung, und
- Fig. 6 und 7:: Schnitte nach den Linien 6-6 und 7-7 in Fig. 5;
- Fig. 8:: eine der Flachdichtung gemäß den Figuren 4 bis 7 ähnliche zweite Ausführungsform der erfindungsgemäßen Flachdichtung, und zwar in einem Schnitt entsprechend der Linie 8-8 in Fig. 5;
- Fig. 8A, 8B und 9:: der Fig. 8 entsprechende Darstellungen einer dritten bis fünften Ausführungsform;
- Fig. 9A:: eine Schnittdarstellung des in Fig. 7 oder in Fig. 9 gezeigten Dichtungslagenstegs, in welchen ein Bauteilsteg eingreift, und
- Fig. 10, 10A und 11:: wiederum der Fig. 8 entsprechende Darstellungen einer sechsten, siebten und achten Ausführungsform.

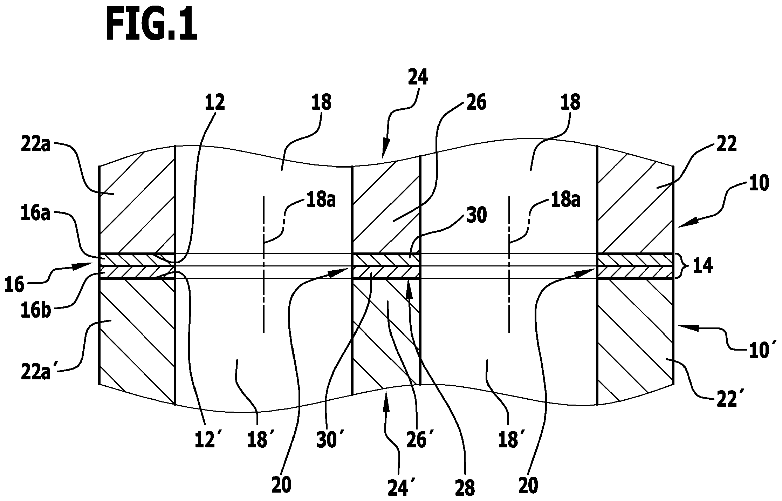

Die Fig. 1 zeigt einander benachbarte Bereiche zweier Bauteile 10 und 10', deren eines beispielsweise ein Auspuffkrümmer eines Hubkolben-Verbrennungsmotors und deren anderes beispielsweise ein Flansch eines Abgasturboladers sein kann. Die beiden Bauteile besitzen ebene und zueinander parallele Bauteil-Dichtflächen 12 und 12', welche im montierten Abdichtungssystem einen sogenannten Dichtspalt 14 zwischen sich einschließen und begrenzen, in welchem eine zwischen den Bauteil-Dichtflächen 12, 12' eingespannte Dichtungsplatte 16 einer metallischen Flachdichtung angeordnet ist, die beispielsweise zwei metallische Dichtungslagen 16a und 16b aufweist. Üblicherweise handelt es sich bei den Bauteilen 10, 10' um Metallgussteile.

In jedem der Bauteile 10, 10' sind mehrere einander benachbarte Heißgaskanäle 18, 18' ausgebildet, welche im vorstehend erwähnten Beispiel der Führung von heißen Abgasströmen des Verbrennungsmotors dienen, in die Bauteil-Dichtflächen 12, 12' münden und über in der Dichtungsplatte 16 ausgebildete Heißgas-Durchlassöffnungen 20 miteinander kommunizieren.

Die in den Bauteil-Dichtflächen 12, 12' liegenden Mündungsöffnungen zweier miteinander kommunizierender Heißgaskanäle 18, 18' und die dazwischen liegende Heißgas-Durchlassöffnung 20 der Dichtungsplatte 16 sind wie üblich vorzugsweise jeweils gleich groß sowie von gleicher Form und liegen deckungsgleich übereinander. Mindestens in an den Dichtspalt 14 angrenzenden Bereichen haben die Heißgaskanäle 18, 18' Achsen 18a, wobei die Achsen zweier miteinander kommunizierender Heißgaskanäle 18, 18' zusammenfallen und sich quer (nicht unbedingt senkrecht) zur Ebene des Dichtspalts 14 bzw. der Dichtungsplatte 16 erstrecken.

Der Einfachheit halber zeigt die Fig. 1 Bauteile 10, 10' mit jeweils nur zwei einander benachbarten Heißgaskanälen 18, 18', die Bauteile können aber auch eine größere Anzahl von Heißgaskanälen beinhalten.

Jedes der Bauteile 10, 10' weist periphere Bauteilbereiche auf, welche an und in der Nachbarschaft der Bauteil-Dichtflächen 12, 12' von Außenwänden 22 und 22a des Bauteils 10 bzw. von Außenwänden 22' und 22a' des Bauteils 10' gebildet werden. Ferner werden an und in der Nachbarschaft der Bauteil-Dichtflächen 12, 12' einander benachbarte Heißgaskanäle 18, 18' durch Trennwände 24, 24' der beiden Bauteile 10, 10' voneinander getrennt, wobei die Trennwand 24 an und in der unmittelbaren Nachbarschaft der Bauteil-Dichtfläche 12 einen Bauteilsteg 26 bildet, und entsprechend bildet die Trennwand 24' einen Bauteilsteg 26', wobei bei kaltem und noch nicht betriebenen Abdichtungssystem die Stirnfläche des Bauteilstegs 26 und die Stirnflächen der Außenwände 22 und 22a in einer Ebene liegen, und zwar in der Ebene der Bauteil-Dichtfläche 12, und Entsprechendes gilt für die Stirnflächen des Bauteilstegs 26', der Außenwand 22' und der Außenwand 22a' sowie für die Bauteil-Dichtfläche 12'.

Zwischen einander benachbarten Heißgas-Durchlassöffnungen 20 weisen die Dichtungslagen 16a, 16b Dichtungslagenstege 30, 30' und weist die Dichtungsplatte 16 einen von den Dichtungslagenstegen gebildeten Dichtungsplattensteg 28 auf, welcher gemäß Fig. 1 von oben oder unten gesehen einander benachbarte Heißgas-Durchlassöffnungen 20 bzw. im Betrieb einander benachbarte Heißgasströme voneinander trennt.

Im Betrieb des Abdichtungssystems werden die Außenwände 22, 22a, 22' und 22a' nur einseitig, nämlich von den Heißgaskanälen 18, 18' her durch die Heißgase mit Wärme beaufschlagt, während die Bauteilstege 26, 26' auf beiden Seiten, nämlich von jeweils zwei Heißgaskanälen 18 her mit Wärme beaufschlagt werden, so dass sich bei Aufnahme des Betriebs die Bauteilstege 26, 26' schneller erhitzen und im Betrieb auch heißer werden als die Außenwände 22, 22a, 22', 22a'. Entsprechend schneller und stärker dehnen sich die Bauteilstege 26, 26' in axialer Richtung (das heißt in Richtung der Achsen 18a) gemäß Fig. 1 nach unten bzw. nach oben aus, was zur Folge hat, dass die Pressungskräfte zwischen den Bauteilstegen 26, 26' und dem Dichtungsplattensteg 28 weit größer sind als die Pressungskräfte zwischen den Außenwänden 22, 22', 22a, 22a' und den zwischen diesen angeordneten Bereichen der Dichtungsplatte 16. Durch diese großen Pressungskräfte zwischen den Bauteilstegen 26, 26' und dem Dichtungsplattensteg 28 werden die Werkstoffe der besonders heißen Bauteilstege 26, 26' plastisch verformt und wird gegebenenfalls die Dichtungsplatte 16 im Bereich des Dichtungsplattenstegs 28 verformt oder in anderer Weise beschädigt, so dass nach Betriebsbeendigung und Abkühlung des Abdichtungssystems zwischen den Stirnflächen der Bauteilstege 26, 26' und dem Dichtungsplattensteg 28 dauerhaft verbleibende Spalte vorliegen, durch die hindurch ein beträchtlicher Gasaustausch zwischen einander benachbarten Heißgaskanälen 18 bzw. 18' stattfinden kann, und zwar nicht nur bei der Wiederaufnahme des Betriebs, sondern auch im Dauerbetrieb des Abdichtungssystems.

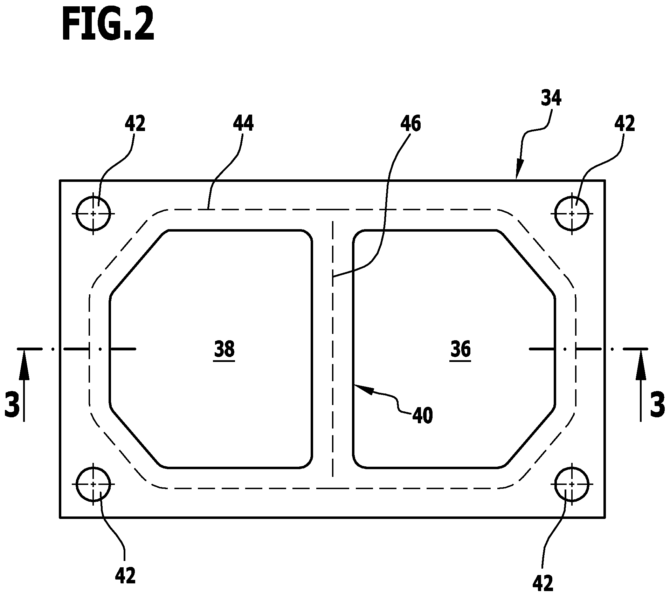

Die Fig. 2 zeigt eine Draufsicht auf eine metallische Flachdichtung, bei der es sich um die in dem Abdichtungssystem gemäß Fig. 1 verwendete Flachdichtung handeln könnte, aber auch um eine Flachdichtung gemäß der vorliegenden Erfindung, worauf im Folgenden noch eingegangen werden soll.

Die in Fig. 2 gezeigte Flachdichtung hat eine Dichtungsplatte 34, welche zwei oder mehr übereinander angeordnete metallische Dichtungslagen aufweisen soll (was aus Fig. 2 nicht hervorgeht). In der Dichtungsplatte 34 sind zwei einander benachbarte Heißgas-Durchlassöffnungen 36 und 38 ausgebildet, welche durch einen Dichtungsplattensteg 40 voneinander getrennt werden. Ferner weist die Dichtungsplatte 34 Schraubenlöcher 42 für den Durchtritt von Montageschrauben auf, mit deren Hilfe die die Dichtungsplatte 34 bildende Flachdichtung zwischen Bauteil-Dichtflächen eingespannt werden kann und damit die diese Dichtflächen bildenden Bauteile gegeneinander gezogen werden können.

Mindestens eine der die Dichtungsplatte 34 bildenden Dichtungslagen ist mit einer Abdichtsicke 44 versehen, welche die Gesamtheit der Heißgas-Durchlassöffnungen 36 und 38 vollständig und in sich geschlossen umgibt. Ferner weist mindestens eine der die Dichtungsplatte 34 bildenden Dichtungslagen im Bereich des Dichtungsplattenstegs 40 mindestens eine weitere Abdichtsicke 46 auf, welche sich in Längsrichtung des Dichtungsplattenstegs 40 erstreckt, zwei von der Abdichtsicke 44 etwas beabstandete Längsenden besitzen kann und zwischen diesen Längsenden nicht unterbrochen ist.

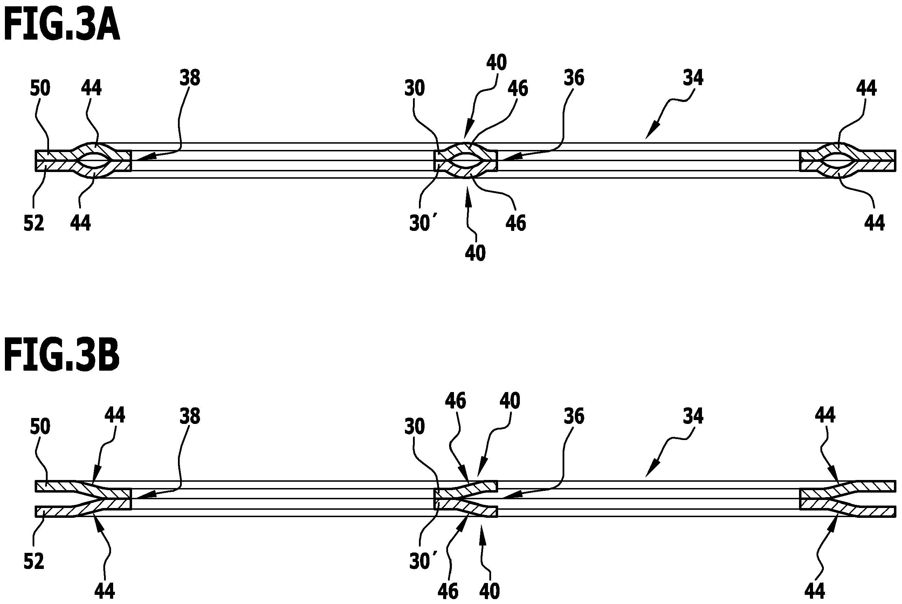

Die Figuren 3A und 3B zeigen Schnitte nach der Linie 3-3 in Fig. 2 durch zwei unterschiedliche, jedoch ähnliche und nicht erfindungsgemäße Ausführungsformen der in Fig. 2 dargestellten Flachdichtung, und in den Figuren 3A und 3B wurden dieselben Bezugszeichen wie in Fig. 2 verwendet. Die Fig. 3A und 3B lassen jedoch erkennen, dass die Dichtungsplatte 34 von zwei Dichtungslagen 50 und 52 gebildet wird.

Bei der Ausführungsform gemäß Fig. 3A werden alle Abdichtsicken 44 und 46 von Vollsicken gebildet, bei der Ausführungsform gemäß Fig. 3B von Halbsicken. Schließlich sei für nicht erfindungsgemäße Ausführungsformen erwähnt, dass die Dichtungslage 50 in allen ihren Bereichen dieselbe Materialdicke aufweist, und Gleiches gilt für die Dichtungslage 52, obwohl die Materialdicken der beiden Dichtungslagen unterschiedlich sein könnten. Dann ist infolgedessen die Summe der Materialdicken der Dichtungslagen 50 und 52 in allen Bereichen der Dichtungsplatte 34 dieselbe, auch wenn diese Materialdickensumme bei der in Fig. 3B gezeigten Flachdichtung eine andere sein kann als bei der Flachdichtung gemäß Fig. 3A.

Durch eine Modifikation der in den Figuren 3A und 3B dargestellten Flachdichtungen können diese nun erfindungsgemäß gestaltet werden: Hierzu wird die Materialdicke mindestens einer der Dichtungslagen 50 und 52 im Bereich ihres Dichtungslagenstegs 30 bzw. 30' mit einer reduzierten Materialdicke versehen, welche kleiner ist als die Materialdicke dieser Dichtungslage in anderen, an die Heißgas-Durchlassöffnungen 36 und 38 angrenzenden Bereichen dieser Dichtungslage. Anhand der Fig. 1 und deren obiger Beschreibung wird verständlich, dass sich durch diese Maßnahme die Pressungskräfte zwischen dem Dichtungsplattensteg 40 (in Fig. 1 mit 28 bezeichnet) und den diesen einspannenden Bauteilstegen 26, 26' so reduzieren lassen, dass das Risiko einer dauerhaften Verformung dieser Bauteilstege und/oder einer Beschädigung des Dichtungsplattenstegs 40 zumindest nahezu beseitigt wird.

Im Hinblick auf die Darstellung der Länge und Lage der Abdichtsicke 46 in Fig. 2 wird schließlich noch darauf hingewiesen, dass in der in Fig. 3A gezeigten Flachdichtung bei erfindungsgemäßer Modifikation die Abdichtsicken 46 an ihren Enden in die Abdichtsicken 44 einmünden könnten, da alle Abdichtsicken als Vollsicken gestaltet sind.

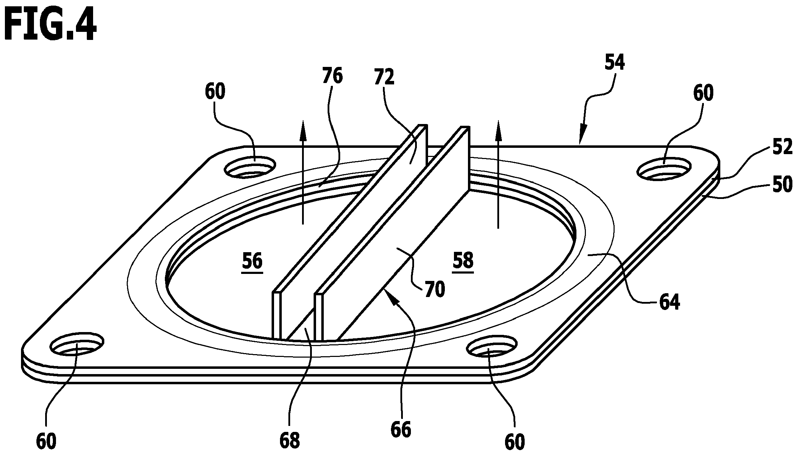

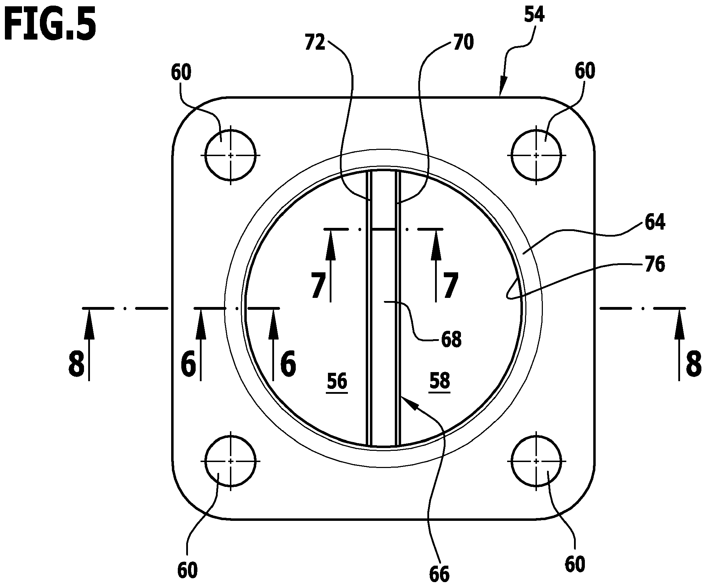

Die Figuren 4 und 5 zeigen eine besonders vorteilhafte Ausführungsform der erfindungsgemäßen Gestaltung einer Flachdichtung im Bereich zweier einander benachbarter Heißgas-Durchlassöffnungen; in diesem Zusammenhang wird darauf hingewiesen, dass die Gestaltung dieser Flachdichtung außerhalb dieser Heißgas-Durchlassöffnungen für das Grundkonzept der vorliegenden Erfindung nicht entscheidend ist.

Wie die Figuren 4 bis 7 erkennen lassen, hat diese Flachdichtung eine von zwei Dichtungslagen 50 und 52 gebildete Dichtungsplatte 54 mit zwei Heißgas-Durchlassöffnungen 56 und 58 sowie Schraubenlöchern 60 für den Durchtritt von Montageschrauben.

Jede der Dichtungslagen 50, 52 ist mit einer die Gesamtheit der Heißgas-Durchlassöffnungen 56 und 58 vollständig umschließenden, endlosen Abdichtsicke 62 bzw. 64 versehen, wobei diese Sicken als Vollsicken gestaltet sind und in entgegengesetzte Richtungen über die beiden Hauptoberflächen der Dichtungsplatte 54 überstehen. Diese Abdichtsicken könnten aber auch als Halbsicken gestaltet sein. Generell kommt es nur darauf an, dass die Gesamtheit der beiden oder aller Heißgas-Durchlassöffnungen einer Flachdichtung von mindestens einem Abdichtelement vollständig umschlossen wird, um den Austritt von Heißgas aus dem Abdichtungssystem zu verhindern.

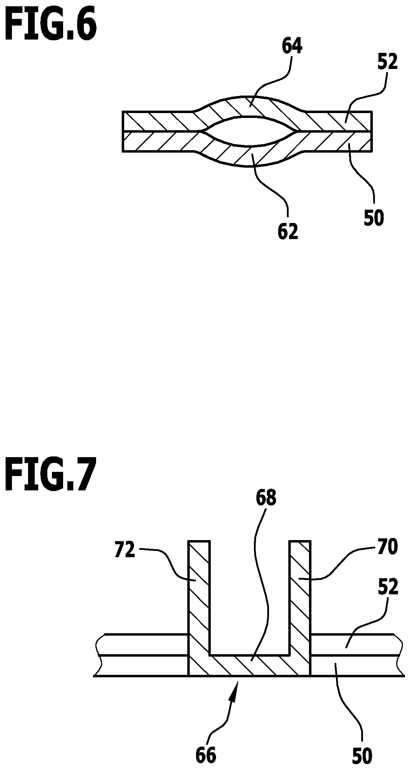

In einer Draufsicht auf die Dichtungsplatte 54 werden zwei einander benachbarte Heißgas-Durchlassöffnungen, nämlich im vorliegenden Fall die Öffnungen 56 und 58, durch einen in Fig. 5 mit 66 bezeichneten Dichtungsplattensteg voneinander getrennt; erfindungsgemäß wird dieser Dichtungsplattensteg jedoch nur von einer einzigen Dichtungslage gebildet, nämlich von einem an der Dichtungslage 50 ausgebildeten Dichtungslagensteg 66, der bei der zeichnerisch dargestellten bevorzugten Ausführungsform einen ungefähr U-förmigen Querschnitt aufweist und von einem vorzugsweise in der Ebene der Dichtungslage 50 liegenden Stegboden 68 sowie zwei steg- oder rippenartigen Gassperrelementen 70 und 72 gebildet wird, welche über die Dichtungslage 50 nach oben vorspringen und auch über die obere Hauptoberfläche der Dichtungsplatte 54 überstehen. Wie im Folgenden noch näher erläutert werden wird, weist der ungefähr U-förmige Querschnitt des Dichtungslagenstegs 66 vorzugsweise schon im Anlieferungszustand der Flachdichtung, das heißt bei noch nicht beanspruchter Flachdichtung, eine solche lichte innere Weite, das heißt einen Querabstand zwischen den Gassperrelementen 70 und 72 auf, dass sich ein Bauteilsteg entsprechend dem Bauteilsteg 26 des in Fig. 1 gezeigten Abdichtungssystems gemäß Fig. 7 von oben zwischen die Gassperrelemente 70, 72 einschieben und bis zum Stegboden 68 vorschieben lässt, Letzteres gegebenenfalls unter einer Aufweitung des Zwischenraums zwischen den Gassperrelementen 70 und 72, wobei diese gemäß Fig. 7 in horizontaler Richtung und voneinander weg insbesondere elastisch ausgelenkt und dabei gegen den Bauteilsteg federnd angelegt werden. Bei eingebauter Flachdichtung können die Gassperrelemente 70 und 72 einen Bauteilsteg, wie den Bauteilsteg 26 des in Fig. 1 gezeigten Abdichtungssystems, aber auch mehr oder minder lose zwischen sich aufnehmen und müssen nicht abdichtend gegen die seitlichen Flächen des Bauteilstegs anliegen.

Bei der bevorzugten Ausführungsform erstrecken sich die Gassperrelemente 70 und 72 in einer Draufsicht auf die Dichtungsplatte 54 bis zu den Rändern der Heißgas-Durchlassöffnungen 56 und 58.

Ferner wurden bei der bevorzugten Ausführungsform die Gassperrelemente 70 und 72 aus der Dichtungslage 50 herausgeformt, beispielsweise durch das Anbringen von Stanzschnitten in dieser Dichtungslage und das anschließende Herausbiegen der Gassperrelemente aus der Dichtungslage 50.

Bei bevorzugten Ausführungsformen weist eine auf der den Dichtungslagensteg bildenden Dichtungslage angeordnete Dichtungslage, im zeichnerisch dargestellten Fall also die Dichtungslage 52, im Bereich der beiden Heißgas-Durchlassöffnungen 56 und 58 sowie des Dichtungslagenstegs 66 nur eine einzige Heißgas-Durchlassöffnung 76 auf, deren Kontur mit den Konturen der Heißgas-Durchlassöffnungen 56 und 58 zu beiden Seiten des Dichtungslagenstegs 66 deckungsgleich verläuft, wobei die Heißgas-Durchlassöffnung 76 von den Gassperrelementen 70 und 72 von unten nach oben durchsetzt wird.

Bei bevorzugten Ausführungsformen der erfindungsgemäßen Flachdichtung besteht zumindest eine mit einer die Gesamtheit der Heißgas-Durchlassöffnungen umschließenden Abdichtsicke versehene Dichtungslage aus einem hochlegierten Federstahl, der auch bei den um eine Heißgas-Durchlassöffnung herum in der Dichtungsplatte herrschenden Betriebstemperaturen seine federelastischen Eigenschaften zumindest in nennenswertem Maße beibehält; in diesem Zusammenhang sei bemerkt, dass bei einem Federstahl das Verhältnis der Streckgrenze Rₑ bzw. der Dehngrenze R_{p0,2} zu der Zugfestigkeit Rₘ größer als 0,85 ist. Bei der in den Figuren 4 bis 7 dargestellten Flachdichtung gilt Vorstehendes also vorzugsweise für beide Dichtungslagen 50, 52.

Wenn die in den Figuren 4 bis 7 dargestellte erfindungsgemäße Flachdichtung in der in Fig. 1 dargestellten Art und Weise in einem Abdichtungssystem verwendet wird und der Bauteilsteg 26 in das vom Dichtungslagensteg 66 gebildete U-Profil eingreift, weist die Flachdichtung zwischen den Bauteilstegen 26 und 26' nur eine der Materialdicke der Dichtungslage 50 entsprechende Materialdicke auf, während periphere Bereiche der beiden Bauteile 10, 10' zwischen sich Bereiche der Dichtungsplatte 54 einschließen, deren Materialdicke gleich der Summe der Materialdicken der Dichtungslagen 50 und 52 ist. Dies hat zur Folge, dass sich die Bauteilstege 26 und 26' im Betrieb des Abdichtungssystems axial hinreichend ausdehnen können, ohne dass diese und/oder die Flachdichtung beschädigt werden.

Wegen der gemäß Fig. 4 nach oben weisenden Gassperrelemente 70 und 72 wird diese Flachdichtung für Abdichtungssysteme empfohlen, bei denen die Heißgas-Durchlassöffnungen 56, 58 gemäß Fig. 4 von unten nach oben durchströmt werden.

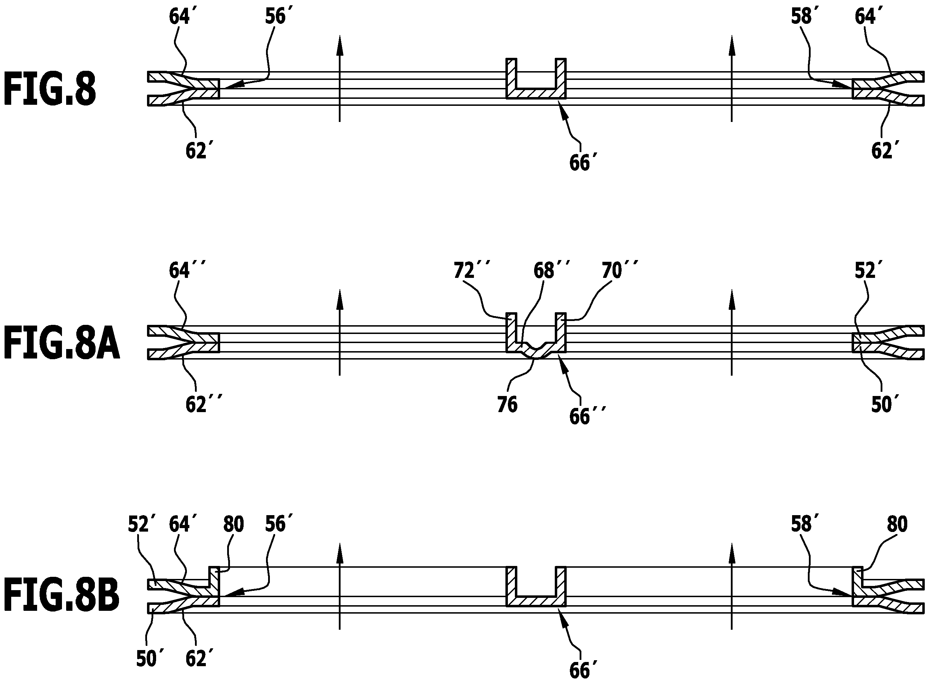

Die Figuren 8 und 8A zeigen Modifikationen der in Fig. 4 dargestellten Ausführungsform, so dass in den Figuren 8 und 8A soweit möglich dieselben Bezugszeichen wie in den Figuren 4 bis 7 verwendet wurden, jedoch unter Hinzufügung eines Strichs bzw. zweier Striche, und im Folgenden werden die Figuren 8 und 8A auch nur insoweit beschrieben, als die in ihnen dargestellten Flachdichtungen von der Flachdichtung gemäß den Figuren 4 bis 7 abweichen.

Bei der in Fig. 8 gezeigten Flachdichtung sind die Abdichtsicken 62' und 64' nicht als Vollsicken, sondern als Halbsicken gestaltet. Im Übrigen besteht Übereinstimmung mit der Flachdichtung gemäß den Figuren 4 bis 7.

Die Flachdichtung gemäß Fig. 8A unterscheidet sich von derjenigen gemäß Fig. 8 dadurch, dass in den Stegboden 68" eine Sicke 76 eingeprägt wurde, welche über den Stegboden in einer der Vorsprungsrichtung der Gassperrelemente 70" und 72" entgegengesetzten Richtung vorspringt und bei entsprechend der Fig. 1 eingebauter Flachdichtung durch den Bauteilsteg 26 gegen die Stirnfläche des Bauteilstegs 26' möglichst gut abdichtend angepresst werden soll. Bei der Sicke 76 handelt es sich vorzugsweise um eine sogenannte Mikrosicke, deren Höhe und Breite ganz wesentlich kleiner ist als die Höhe und Breite einer üblichen Abdichtsicke, wie der Abdichtsicken 44 und 46.

Die in Fig. 8B dargestellte Flachdichtung stellt eine weitere Modifikation der Flachdichtung gemäß Fig. 8 dar und unterscheidet sich von Letzterer nur durch zwei im Folgenden beschriebene Elemente, weshalb in Fig. 8B für die übrigen Elemente dieselben Bezugszeichen wie in Fig. 8 verwendet wurden. Bei der Flachdichtung gemäß Fig. 8B weist eine der Dichtungslagen, nämlich in diesem Fall die Dichtungslage 52' um jede der Heißgas-Durchlassöffnungen 56' und 58' herum, mit Ausnahme der vom Dichtungslagensteg 66' gebildeten Umfangsbereiche jeweils ein rippen- oder stegartiges Gassperr- und/oder Führungselement auf, welches im Folgenden als Rippe bezeichnet werden wird und in Fig. 8B mit 80 gekennzeichnet wurde. Die kragenartigen Rippen 80 haben erfindungsgemäß eine solche Form, dass wenn die in Fig. 8B dargestellte Flachdichtung in das in Fig. 1 gezeigte Abdichtungssystem eingebaut ist, die Rippen 80 in jeweils einen der Heißgaskanäle 18 eingreifen und vorzugsweise gegen deren Innenwandflächen anliegen, und zwar insbesondere mehr oder minder gut abdichtend.

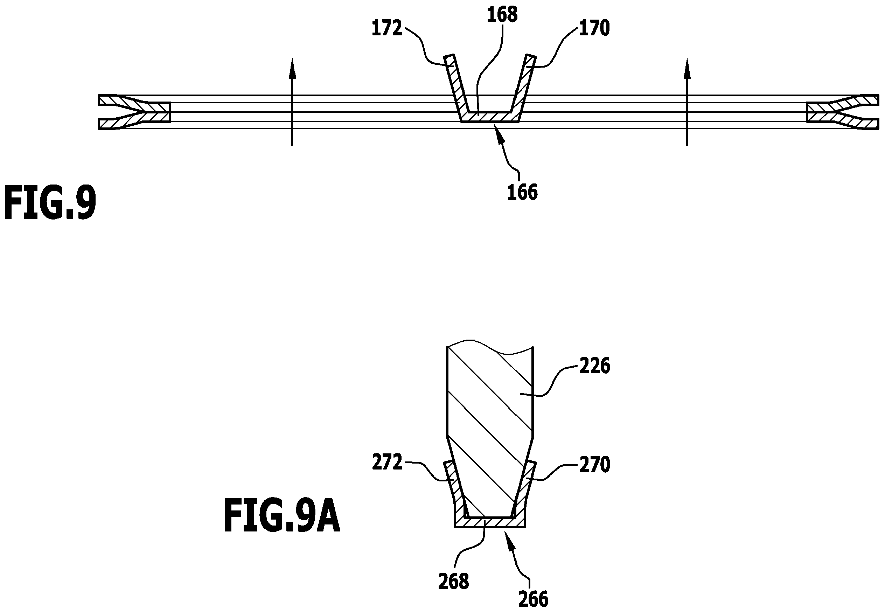

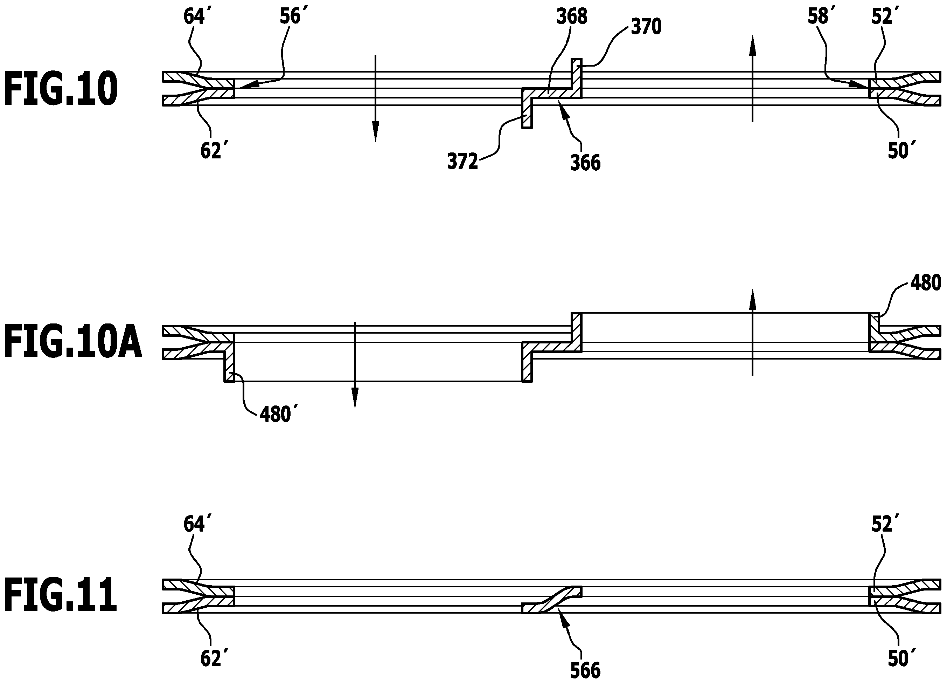

In den Figuren 4, 8, 8A und 8B, aber auch in den noch zu erörternden Figuren 9, 10 und 10A wurden die Richtungen, in denen die Heißgasströme die Flachdichtung (und im eingebauten Zustand die Heißgaskanäle 18, 18') durchströmen, durch Pfeile angedeutet.

Bei den Flachdichtungen gemäß den Figuren 4, 8, 8A, 8B und 9 werden die Heißgas-Durchlassöffnungen der jeweiligen Flachdichtung gleichsinnig, nämlich gemäß den Zeichnungsfiguren von unten nach oben durchströmt, weshalb die Gassperrelemente der Dichtungslagenstege 66 bzw. 66' bzw. 66" nach oben über die Dichtungsplatte der jeweiligen Flachdichtung überstehen, und Gleiches gilt für die Rippen 80 der Flachdichtung gemäß Fig. 8B.

Die Fig. 9 zeigt eine erfindungsgemäße Flachdichtung, welche sich von derjenigen gemäß Fig. 8 nur durch die Gestaltung des Dichtungslagenstegs unterscheidet. Auch der in Fig. 9 gezeigte Dichtungslagensteg 166 hat einen ungefähr U-förmigen Querschnitt und besitzt einen Stegboden 168 sowie zwei stegartige Gassperrelemente 170 und 172, welche jedoch schon bei noch nicht beanspruchter Flachdichtung nicht ungefähr parallel zueinander verlaufen, sondern miteinander einen sich gemäß Fig. 9 nach oben öffnenden spitzen Winkel definieren, so dass sich beim Einbau der Flachdichtung in das in Fig. 1 gezeigte Abdichtungssystem ein dessen Bauteilsteg 26 entsprechender Bauteilsteg leichter zwischen die Gassperrelemente einführen lässt.

Die Fig. 9A zeigt einen Dichtungslagensteg 266 wiederum im Schnitt, und dieser Dichtungslagensteg kann dem Dichtungslagensteg 166 der Flachdichtung gemäß Fig. 9 entsprechen, vorzugsweise entspricht er jedoch dem in Fig. 7 dargestellten Dichtungslagensteg 66, das heißt der Dichtungslagensteg 266 hat vor der Montage der Flachdichtung ungefähr parallel zueinander verlaufende Gassperrelemente 270 und 272, welche im Zuge des Zusammenbaus des Abdichtungssystems durch einen bis zu einem Stegboden 268 abgesenkten und gegen den Stegboden 268 angepressten Bauteilsteg 226 vorzugsweise elastisch ausgelenkt werden, wobei sich die vom Dichtungslagensteg 266 gebildete Nut gemäß Fig. 9A nach oben erweitert.

Entsprechend der Darstellung in Fig. 9A wird ein für eine erfindungsgemäße Flachdichtung vorgesehenes Abdichtungssystem erfindungsgemäß so gestaltet, dass ein in einen Dichtungslagensteg mit ungefähr V- oder ungefähr U-förmigem Querschnitt einzuführender Bauteilsteg (im Falle der Fig. 9A der Bauteilsteg 226) eine Querschnittsform besitzt, welche sich in Richtung auf die Stirnfläche des Bauteilstegs verjüngt, vorzugsweise dadurch, dass die beiden seitlichen Flanken des Bauteilstegs in der Nachbarschaft der Bauteilsteg-Stirnfläche abgeschrägt sind. Auch auf diese Weise lässt sich die Einführung des Bauteilstegs in den Dichtungslagensteg erleichtern.

Die Figuren 10 und 10A zeigen bevorzugte Ausführungsformen einer erfindungsgemäßen Flachdichtung, bei der einander benachbarte Heißgas-Durchlassöffnungen von den Heißgasströmen in entgegengesetzten Richtungen durchströmt werden.

Die Flachdichtung gemäß Fig. 10 unterscheidet sich von derjenigen gemäß Fig. 8 nur in der Gestaltung des Dichtungslagenstegs, weshalb in Fig. 10 soweit wie möglich dieselben Bezugszeichen wie in Fig. 8 verwendet wurden und im Folgenden nur der in Fig. 10 gezeigte Dichtungslagensteg erörtert wird.

Dieser Dichtungslagensteg 366 hat einen ungefähr Z-förmigen Querschnitt mit einem Stegboden 368, von dem auf seiner der Heißgas-Durchlassöffnung 58' zugewandten Seite ein rippen- oder stegartiges Gassperrelement 370 in Strömungsrichtung des die Heißgas-Durchlassöffnung 58' durchsetzenden Gasstroms absteht, während an der anderen Längsseite des Stegbodens 368 ein Gassperrelement 372 vorgesehen ist, welches vom Stegboden in der entgegengesetzten Richtung absteht, nämlich in der Durchströmrichtung der Heißgas-Durchlassöffnung 56'.

Da die in Fig. 10A dargestellte erfindungsgemäße Flachdichtung mit derjenigen gemäß Fig. 10 bis auf zwei Elemente übereinstimmt, welche den Rippen 80 der Ausführungsform gemäß Fig. 8B entsprechen, ist zu der Flachdichtung gemäß Fig. 10A nur zu bemerken, dass es sich bei diesen beiden Elementen um die in Fig. 10A gezeigten Rippen 480 und 480' handelt, welche jeweils in der Durchströmungsrichtung der der betreffenden Rippe benachbarten Heißgas-Durchlassöffnung vorspringen.

Auch die in Fig. 11 dargestellte weitere bevorzugte Ausführungsform der erfindungsgemäßen Flachdichtung entspricht bis auf die Gestaltung ihres Dichtungslagenstegs der Flachdichtung gemäß Fig. 8 und dient nur dem Zweck, anhand der Flachdichtung gemäß Fig. 11 eine weitere Variante des Grundkonzepts der vorliegenden Erfindung zu erläutern. Deshalb wurden in Fig. 11 soweit wie möglich dieselben Bezugszeichen wie in Fig. 8 verwendet.

Gemäß Fig. 11 weist diese Variante der erfindungsgemäßen Flachdichtung einen Dichtungslagensteg 566 auf, der bei dieser Variante von der unteren Dichtungslage 50' gebildet wird, aber auch von der oberen Dichtungslage 52' gebildet werden könnte; in jedem Fall ist die jeweils andere Dichtungslage im Bereich dieses Dichtungslagenstegs stegfrei.

Der Dichtungslagensteg 566 hat eine Querschnittsform ähnlich einem flachgezogenen Z (oder S), und erfindungsgemäß ist die Breite dieser Querschnittsform zumindest ungefähr gleich der Breite der Querschnitte der Stirnflächen der beiden Bauteilstege, zwischen denen bei eingebauter Flachdichtung der Dichtungslagensteg 566 eingespannt ist, wobei diese Bauteilstege den Bauteilstegen 26 und 26' des in Fig. 1 dargestellten Abdichtungssystems entsprechen.

Bei der Flachdichtung gemäß Fig. 11 ist es gleichgültig, in welcher Richtung die beiden dem Dichtungslagensteg 566 benachbarten Heißgas-Durchlassöffnungen der Flachdichtung durchströmt werden.

Zu der erfindungsgemäßen Flachdichtung und damit zu allen in den Zeichnungsfiguren dargestellten Ausführungsformen ist noch Folgendes zu bemerken:
Die Dichtungslagen der Flachdichtung können in jeder bekannten Weise miteinander verbunden sein, beispielsweise durch Punktschweißen.

Bei allen Dichtungslagen kann es sich um sogenannte Funktionslagen handeln (eine Funktionslage weist typischerweise eine oder mehrere Sicken, insbesondere Abdichtsicken auf), bei einer der Dichtungslagen kann es sich aber auch um ein Trägerblech, das heißt eine sogenannte Trägerlage, oder um eine sogenannte Stopperlage handeln, wobei die Blechdicke/Materialdicke einer Trägerlage oder einer Stopperlage üblicherweise deutlich größer ist als die Blechdicke/Materialdicke einer Funktionslage.

Bei einer erfindungsgemäßen Flachdichtung hat eine Funktionslage bzw. haben die Funktionslagen vorzugsweise eine Blechdicke im Bereich zwischen ca. 0,25 mm bis ca. 0,30 mm. Die Höhe eines oder der rippen- bzw. stegartigen Gassperrelemente beträgt dann ca. 3 mm bis ca. 4 mm.

Die die Gesamtheit der Heißgas-Durchlassöffnungen umschließende Abdichtsicke hat vorzugsweise eine Breite von ca. 1,5 mm bis ca. 3 mm und insbesondere eine Breite von ca. 2 mm.

Schließlich beträgt bei bevorzugten Ausführungsformen der erfindungsgemäßen Flachdichtung die Breite des Querschnitts eines Dichtungsplattenstegs bzw. eines Dichtungslagenstegs ca. 2 mm bis ca. 4 mm, insbesondere ca. 2,5 mm bis ca. 3,5 mm.

Wird die vorliegende Erfindung mittels eines dickenreduzierten Dichtungslagenstegs realisiert, vorzugsweise an einer Dichtungslage mit einer Materialdicke/Blechdicke im Bereich einiger Zehntel Millimeter (typischerweise ca. 0,2 bis ca. 0,3 mm), wird die Blechdicke im Bereich des Dichtungslagenstegs vorzugsweise um einige Hundertstel Millimeter reduziert (typischerweise um ca. 0,05 mm). Außerdem kann es vorteilhaft sein, den Dichtungslagensteg durch Prägen mit einer topographisch gestalteten Oberfläche zu versehen.

Zu der vorliegenden Erfindung ist noch Folgendes zu bemerken: Vor allem im Abgasbereich eines Verbrennungsmotors einzubauende metallische Flachdichtungen werden vom Dichtungskonstrukteur für die jeweilige Einbaustelle konzipiert, bei der es sich insbesondere um den Dichtspalt zwischen einem Zylinderkopf und einem Abgaskrümmer oder um den Dichtspalt zwischen einem Anschlussflansch eines Abgasturboladers und einem Bauteil handelt, an welches der Abgasturbolader angebaut ist. Dem Dichtungskonstrukteur sind die Daten wie Abmessungen und Materialien der die Flachdichtung zwischen sich aufnehmenden Bauteile ebenso wie deren Betriebstemperaturen bekannt, so dass er insbesondere mit einer FEM-Berechnung die im Betrieb auftretenden Wärmedehnungen der Bauteilstege ermitteln kann, zwischen denen bei eingebauter Flachdichtung deren mindestens einer Dichtungsplattensteg angeordnet ist. Infolgedessen ist der Konstrukteur einer erfindungsgemäßen Flachdichtung ohne Weiteres in der Lage, die Summe der Materialdicken der Dichtungslagen im Bereich eines Dichtungsplattenstegs so zu bestimmen, dass im Betrieb die auf den Dichtungsplattensteg einwirkenden Pressungskräfte nicht zu nachteiligen Effekten führen, wobei in diesem Zusammenhang auf die eingangs gemachten Ausführungen verwiesen wird.

## Patentansprüche

1. Metallische Flachdichtung zum Einbau in einen Dichtspalt (14) zwischen einander zugewandten Dichtflächen (12, 12') von miteinander verbundenen, Heißgas-führenden Bauteilen (10, 10'), wobei die Flachdichtung eine bei eingebauter Dichtung gepresste Dichtungsplatte (54) mit mindestens zwei übereinander angeordneten metallischen Dichtungslagen (50, 52) und mehreren Heißgas-Durchlassöffnungen (56, 58) für einander benachbarte Heißgasströme aufweist und die Dichtungsplatte zwischen mindestens zwei einander benachbarten Heißgas-Durchlassöffnungen einen die Letzteren voneinander trennenden, bei eingebauter Dichtung gepressten Dichtungsplattensteg (64) besitzt,
**dadurch gekennzeichnet, dass** die Summe der Metalldicken der Dichtungslagen (50, 52) im Bereich eines dem gasmäßigen Trennen von Heißgas-Durchlassöffnungen (56, 58) durchströmenden, einander benachbarten Heißgasströmen im Dichtspalt (14) dienenden Dichtungsplattenstegs (64) kleiner ist als in an die Heißgas-Durchlassöffnungen angrenzenden anderen Dichtungsplattenbereichen, und dass die Dichtungsplatte (54) auch im Bereich dieses Dichtungsplattenstegs zumindest eine Dichtungslage (50) aufweist.

2. Flachdichtung nach Anspruch 1, **dadurch gekennzeichnet, dass** mindestens eine erste (50) der Dichtungslagen (50, 52) im Bereich mindestens eines Dichtungsplattenstegs (66) einen Dichtungslagensteg aufweist, welcher in einer Draufsicht auf die Dichtungsplatte (54) die beiden dem Dichtungsplattenstegs benachbarten Heißgas-Durchlassöffnungen (56, 58) voneinander trennt.

3. Flachdichtung nach Anspruch 2, **dadurch gekennzeichnet, dass** der Dichtungslagensteg (66) mit mindestens einem länglichen, sich in Längsrichtung des Dichtungslagenstegs erstreckenden Gassperrelement (70, 72) versehen ist, welches über die erste Dichtungslage (50) übersteht.

4. Flachdichtung nach Anspruch 3, **dadurch gekennzeichnet, dass** das Gassperrelement (70, 72) über mindestens eine der beiden Hauptoberflächen der Dichtungsplatte (54) vorspringt.

5. Flachdichtung nach Anspruch 3 oder 4, **dadurch gekennzeichnet, dass** der Dichtungslagensteg (66; 66'; 66"; 166; 266; 366; 566) im Bereich des Gassperrelements einen im Wesentlichen L-, V-, U- oder Z-förmigen Querschnitt aufweist.

6. Flachdichtung nach Anspruch 5, **dadurch gekennzeichnet, dass** das mindestens eine Gassperrelement (270, 272) bei eingebauter Flachdichtung quer zu seiner Längsrichtung ausgelenkt und vorgespannt ist.

7. Flachdichtung nach Anspruch 2, **dadurch gekennzeichnet, dass** mindestens eine Dichtungslage eine derart variierende Materialdicke aufweist, dass diese Dichtungslage im Bereich mindestens eines von ihr gebildeten Dichtungslagenstegs eine Materialdicke hat, welche kleiner ist als die Materialdicke in anderen, an die Heißgas-Durchlassöffnungen angrenzenden Bereichen dieser Dichtungslage.

8. Flachdichtung nach Anspruch 7, **dadurch gekennzeichnet, dass** in der Dichtungslage mit variierender Materialdicke alle Dichtungslagenstege eine kleinere Materialdicke aufweisen als andere, an die Heißgas-Durchlassöffnungen angrenzende Bereiche dieser Dichtungslage.

9. Flachdichtung nach Anspruch 5 oder 7 oder 8, **dadurch gekennzeichnet, dass** der dickenreduzierte Dichtungslagensteg mit mindestens einem Gassperrelement in Form einer länglichen, sich in Längsrichtung des Dichtungslagenstegs erstreckenden Sicke (76) versehen ist.

10. Flachdichtung nach einem der Ansprüche 2 bis 6, **dadurch gekennzeichnet, dass** mindestens eine zweite Dichtungslage (52) im Bereich eines Dichtungsplattenstegs (66) stegfrei ist.

11. Flachdichtung nach Anspruch 10, **dadurch gekennzeichnet, dass** die stegfreie Dichtungslage (52) in den Bereichen aller Dichtungsplattenstege (66) stegfrei ist.

12. Flachdichtung nach einem der vorstehenden Ansprüche, welche so gestaltet ist, dass die bereichsweise Verkleinerung der Summe der Materialdicken der Dichtungslagen nur durch eine einzige Dichtungslage (52) bewirkt wird.

13. Flachdichtung nach einem oder mehreren der vorstehenden Ansprüche, **dadurch gekennzeichnet, dass** mindestens eine der Dichtungslagen (50, 52) mit einer in einer Draufsicht auf die Dichtungsplatte die Gesamtheit der Heißgas-Durchlassöffnungen (36, 38) vollständig umschließenden Abdichtsicke (44; 64) versehen ist.

14. Flachdichtung nach den Ansprüchen 3 und 13, **dadurch gekennzeichnet, dass** das Gassperrelement (70, 72) von der Abdichtsicke (64) beabstandete Längsenden aufweist.

15. Flachdichtung nach einem der vorstehenden Ansprüche, **dadurch gekennzeichnet, dass** die Dichtung als für den Abgasbereich eines Verbrennungsmotors gestaltete Dichtung ausgebildet ist.

16. Flachdichtung nach Anspruch 15, **dadurch gekennzeichnet, dass** die Dichtung als Flanschdichtung für den Einbau an einem Abgasturbolader gestaltet ist.

17. Abdichtungssystem mit einer metallischen Flachdichtung, welche zwischen einander zugewandten Dichtflächen (12, 12') von miteinander verbundenen Bauteilen (10, 10') eingespannt ist, deren jedes mindestens zwei benachbart zueinander verlaufende, in seine Bauteil-Dichtfläche mündende Heißgaskanäle (18, 18') enthält, zwischen denen im Bauteil eine die Heißgaskanäle voneinander trennende Trennwand (24, 24') vorgesehen ist, die einen an der Bauteil-Dichtfläche endenden Bauteilsteg (26, 26') bildet, wobei die Flachdichtung eine Dichtungsplatte (54) mit mindestens zwei übereinander angeordneten metallischen Dichtungslagen (50, 52) und mehrere Heißgas-Durchlassöffnungen (56, 58) für einander benachbarte Heißgasströme aufweist, über welche die Heißgaskanäle der Bauteile miteinander kommunizieren, und wobei die Dichtungsplatte zwischen mindestens zwei einander benachbarten Heißgas-Durchlassöffnungen einen die Letzteren voneinander trennenden Dichtungsplattensteg (64) besitzt, der zwischen zwei Bauteilstegen der die Flachdichtung zwischen sich aufnehmenden Bauteile angeordnet und eingespannt ist, **dadurch gekennzeichnet, dass** die Summe der Metalldicken der Dichtungslagen im Bereich eines Dichtungsplattenstegs (64) kleiner ist als in an die Heißgas-Durchlassöffnungen (56, 58) angrenzenden anderen Dichtungsplattenbereichen, und dass die Dichtungsplatte (54) auch im Bereich dieses Dichtungsplattenstegs zumindest eine Dichtungslage (50) aufweist.

18. Abdichtungssystem nach Anspruch 17, **gekennzeichnet durch** eine Flachdichtung nach einem der Ansprüche 2 bis 16.

19. Abdichtungssystem nach Anspruch 17 mit einer Flachdichtung nach Anspruch 5, **dadurch gekennzeichnet, dass** der dem Dichtungslagensteg (266) mit im Wesentlichen V- oder U-förmigem Querschnitt zugeordnete, auf der offenen Seite des Dichtungslagenstegs liegende und eine Letzterem zugewandte Stirnfläche aufweisende Bauteilsteg (226) quer zur Bauteilsteg-Längsrichtung einen Querschnitt aufweist, welcher sich in Richtung auf die Bauteil-Dichtfläche so verjüngt, dass die Bauteilsteg-Stirnfläche gegen den Boden (268) des V- oder U-förmigen Dichtungslagensteg-Querschnitts anliegt.

## Claims

1. Metallic flat gasket for installation in a sealing gap (14) between sealing surfaces (12, 12'), which face each other, of components (10, 10') conducting hot gas, which are connected to one another, wherein the flat gasket comprises a gasket plate (54) which is compressed when the gasket is installed and which has at least two metallic gasket layers (50, 52) arranged one above the other and several hot gas through-openings (56, 58) for adjacent flows of hot gas, and the gasket plate has between at least two adjacent hot gas through-openings a gasket plate web (64) which is compressed when the gasket is installed and which separates the hot gas through-openings from one another,
**characterized in that** the sum of the metal thicknesses of the gasket layers (50, 52) in the region of a gasket plate web (64), serving for the separation with respect to gas of adjacent flows of hot gas in the sealing gap (14) flowing through the hot gas through-openings (56, 58), is less than in other gasket plate regions bordering on the hot gas through-openings, and **in that** the gasket plate (54) also has in the region of this gasket plate web at least one gasket layer (50).

2. Flat gasket in accordance with claim 1, **characterized in that** at least a first one (50) of the gasket layers (50, 52) comprises in the region of at least one gasket plate web (66) a gasket layer web which, in a plan view of the gasket plate (54), separates the two hot gas through-openings (56, 58) adjacent to the gasket plate web from each other.

3. Flat gasket in accordance with claim 2, **characterized in that** the gasket layer web (66) is provided with at least one elongate gas blocking element (70, 72) extending in the longitudinal direction of the gasket layer web and protruding beyond the first gasket layer (50).

4. Flat gasket in accordance with claim 3, **characterized in that** the gas blocking element (70, 72) projects over at least one of the two main surfaces of the gasket plate (54).

5. Flat gasket in accordance with claim 3 or 4, **characterized in that** the gasket layer web (66; 66'; 66"; 166; 266; 366; 566) has a substantially L-shaped, V-shaped, U-shaped or Z-shaped cross section in the region of the gas blocking element.

6. Fiat gasket in accordance with claim 5, **characterized in that** when the flat gasket is installed, the at least one gas blocking element (270, 272) is deflected and pretensioned transversely to its longitudinal direction.

7. Flat gasket in accordance with claim 2, **characterized in that** at least one gasket layer has such a varying material thickness that this gasket layer has in the region of at least one gasket layer web formed by it a material thickness which is smaller than the material thickness in other regions of this gasket layer bordering on the hot gas through-openings.

8. Flat gasket in accordance with claim 7, **characterized in that** in the gasket layer with varying material thickness, all of the gasket layer webs have a smaller material thickness than other regions of this gasket layer bordering on the hot gas through-openings.

9. Flat gasket in accordance with claim 5 or 7 or 8, **characterized in that** the gasket layer web of reduced thickness is provided with at least one gas blocking element in the form of an elongate bead (76) extending in the longitudinal direction of the gasket layer web.

10. Flat gasket in accordance any one of claims 2 to 6, **characterized in that** at least one second gasket layer (52) has no web in the region of a gasket plate web (66).

11. Flat gasket in accordance with claim 10, **characterized in that** the gasket layer (52) having no web has no web in the regions of all gasket plate webs (66).

12. Flat gasket in accordance with any one of the preceding claims, which is configured such that the reduction in some regions in the sum of the material thicknesses of the gasket layers is only brought about by a single gasket layer (52).

13. Flat gasket in accordance with any one or more of the preceding claims, **characterized in that** at least one of the gasket layers (50, 52) is provided with a sealing bead (44; 64) which, in a plan view of the gasket plate, completely encloses the entirety of the hot gas through-openings (36, 38).

14. Flat gasket in accordance with claims 3 and 13, **characterized in that** the gas blocking element (70, 72) has lengthwise ends spaced from the sealing bead (64).

15. Flat gasket in accordance with any one of the preceding Claims, **characterized in that** the gasket is constructed as a gasket configured for the exhaust gas region of an internal combustion engine.

16. Flat gasket in accordance with claim 15, **characterized in that** the gasket is configured as a flange gasket for installation on an exhaust gas turbocharger.

17. Sealing system with a metallic flat gasket, which is clamped between sealing surfaces (12, 12'), which face each other, of components (10, 10') which are connected to one another, each of said components (10, 10') containing at least two hot gas channels (18, 18') which extend adjacently to each other and open into its component sealing surface, and between which there is provided in the component a separating wall (24, 24') separating the hot gas channels from each other and forming a component web (26, 26') ending at the component sealing surface, said flat gasket comprising a gasket plate (54) with at least two metallic gasket layers (50, 52) arranged one above the other and several hot gas through-openings (56, 58) for adjacent flows of hot gas via which the hot gas channels of the components communicate with one another, and said gasket plate having between at least two adjacent hot gas through-openings a gasket plate web (64) which separates the hot gas through-openings from one another and is arranged and clamped between two component webs of the components accommodating the flat gasket between them, **characterized in that** the sum of the metal thicknesses of the gasket layers in the region of a gasket plate web (64) is less than in other gasket plate regions bordering on the hot gas through-openings (56, 58), and **in that** the gasket plate (54) also has in the region of this gasket plate web at least one gasket layer (50).

18. Sealing system in accordance with claim 17, **characterized by** a flat gasket in accordance with any one of claims 2 to 16.

19. Sealing system in accordance with claim 17 with a flat gasket in accordance with claim 5, **characterized in that** the component web (226) associated with the gasket layer web (266) of substantially V-shaped or U-shaped cross section, lying on the open side of the gasket layer web and having an end face facing the gasket layer web has a cross section transverse to the longitudinal direction of the component web, which tapers in the direction towards the component sealing surface such that the end face of the component web lies against the base (268) of the V-shaped or U-shaped cross section of the gasket layer web.

## Revendications

1. Joint plat métallique à insérer dans une fente d'étanchéité (14) entre deux faces d'étanchéité (12, 12'), dirigées l'une vers l'autre, de composants (10, 10'), conduisant un gaz chaud et reliés entre eux, le joint plat présentant une plaque d'étanchéité (54) compressée lorsque le joint est en place et comportant au moins deux couches d'étanchéité métalliques (50, 52) superposées et plusieurs orifices de passage (56, 58) pour des flux de gaz chaud voisins l'un de l'autre et la plaque d'étanchéité possédant, entre au moins deux orifices de passage de gaz chaud voisins entre eux, une entretoise de plaque d'étanchéité (64) compressée lorsque le joint est en place et séparant ces orifices de passage, **caractérisé en ce que** la somme des épaisseurs de métal des couches d'étanchéité (50, 52) est plus petite au niveau d'une entretoise de plaque d'étanchéité (64) servant à séparer, en termes de gaz, des flux de gaz chaud voisins entre eux et traversant les orifices de passage (56, 58) dans la fente d'étanchéité (14), que dans d'autres zones de plaque d'étanchéité adjacentes aux orifices de passage de gaz chaud, et **en ce que** la plaque d'étanchéité (54) présente au moins une couche d'étanchéité (50) également au niveau de cette entretoise de plaque d'étanchéité.

2. Joint plat selon la revendication 1, **caractérisé en ce qu'**au moins une première couche d'étanchéité (50) parmi les couches d'étanchéité (50, 52) présente, dans la région d'au moins une entretoise de plaque d'étanchéité (66), une entretoise de couche d'étanchéité qui, sur une vue de dessus de la plaque d'étanchéité (54), sépare les deux orifices de passage de gaz chaud (56, 58) avoisinant l'entretoise de plaque d'étanchéité.

3. Joint plat selon la revendication 2, **caractérisé en ce que** l'entretoise de couche d'étanchéité (66) est dotée d'au moins un élément d'arrêt des gaz (70, 72) s'étendant dans le sens longitudinal de l'entretoise de couche d'étanchéité et dépassant de la première couche d'étanchéité (50).

4. Joint plat selon la revendication 3, **caractérisé en ce que** l'élément d'arrêt des gaz (70, 72) est en saillie au-dessus d'au moins une des deux surfaces principales de la plaque d'étanchéité (54).

5. Joint plat selon la revendication 3 ou la revendication 4, **caractérisé en ce que** l'entretoise de couche d'étanchéité (66 ; 66' ; 66" ; 166 ; 266 ; 366 ; 566) présente, dans la région de l'élément d'arrêt des gaz, une section essentiellement en forme de L, de V, de U ou de Z.

6. Joint plat selon la revendication 5, **caractérisé en ce que** l'au moins un élément d'arrêt des gaz (270, 272) est dévié et tendue, lorsque le joint plat est en place, transversalement à son sens longitudinal.

7. Joint plat selon la revendication 2, **caractérisé en ce qu'**au moins une couche d'étanchéité a une épaisseur de matière qui varie de telle façon que cette dernière a, dans la région d'au moins une entretoise de couche d'étanchéité quelle forme, une épaisseur de matière inférieure à l'épaisseur de matière dans d'autres régions de cette couche d'étanchéité adjacentes aux orifices de passage de gaz chaud.

8. Joint plat selon la revendication 7, **caractérisé en ce que**, dans la couche d'étanchéité dont l'épaisseur de matière varie, toutes les entretoises de couche d'étanchéité ont une épaisseur de matière inférieure à l'épaisseur de matière dans d'autres régions de cette couche d'étanchéité adjacentes aux orifices de passage de gaz chaud.

9. Joint plat selon la revendication 5, ou la revendication 7 ou la revendication 8, **caractérisé en ce que** l'entretoise de couche d'étanchéité moins épaisse est dotée d'au moins un élément d'arrêt des gaz ayant la forme d'un bourrelet (76) allongé s'étendant dans le sens longitudinal de l'entretoise de couche d'étanchéité.

10. Joint plat selon l'une quelconque des revendications 2 à 6, **caractérisé en ce qu'**au moins une deuxième couche d'étanchéité (52) ne comporte pas d'entretoise dans la région d'une entretoise de plaque d'étanchéité (66).

11. Joint plat selon la revendication 10, **caractérisé en ce que** la couche d'étanchéité (52) sans entretoise ne comporte pas d'entretoise dans les régions de toutes les entretoises de plaque d'étanchéité (66).

12. Joint plat selon l'une quelconque des revendications précédentes configuré de telle sorte que la diminution par endroits de la somme des épaisseurs de matière des couches d'étanchéité est produite uniquement par une seule couche d'étanchéité (52).

13. Joint plat selon l'une quelconque d'une ou plusieurs des revendications précédentes, **caractérisé en ce qu'**au moins une des couches d'étanchéité (50, 52) est dotée d'un bourrelet d'étanchéité (44 ; 64) entourant complètement la totalité des orifices de passage de gaz chaud (36, 38) sur une vue de dessus de la plaque d'étanchéité.

14. Joint plat selon les revendications 3 et 13, **caractérisé en ce que** l'élément d'arrêt des gaz (70, 72) présente des extrémités longitudinales distantes du bourrelet d'étanchéité (64).

15. Joint plat selon l'une quelconque des revendications précédentes, **caractérisé, en ce que** le joint est en forme de joint configuré pour la zone d'échappement d'un moteur à combustion.

16. Joint plat selon la revendication 15, **caractérisé en ce que** le joint est configuré en joint de bride devant être installé sur un turbocompresseur.

17. Système d'étanchéité comportant un joint plat métallique inséré entre des faces d'étanchéité (12, 12'), dirigées l'une vers l'autre, de composants (10, 10') reliés entre eux, dont chacun contient au moins deux canaux de gaz chaud (18, 18') voisins qui se rejoignent et débouchent dans sa face d'étanchéité de composant, canaux entre lesquels est prévue, dans le composant, une paroi de séparation (24, 24') séparant les canaux de gaz chaud l'un par rapport à l'autre et formant une entretoise de composant (26, 26') se terminant sur la face d'étanchéité du composant, le joint plat présentant une plaque d'étanchéité (54) comportant au moins deux couches d'étanchéité métalliques (50, 52) disposées l'une au-dessus de l'autre et plusieurs orifices de passage de gaz chaud (56, 58) destinés à des flux de gaz chaud voisins entre eux au moyen desquels les canaux de gaz chaud des composants communiquent entre eux, et la plaque d'étanchéité possèdent, entre au moins deux orifices de passage de gaz chaud voisins l'un de l'autre, une entretoise de plaque d'étanchéité (64) séparant ces derniers l'un de l'autre et étant disposée et insérée entre deux entretoises de composant des composants accueillant le joint plat entre eux, **caractérisé en ce que** la somme des épaisseurs de métal des couches d'étanchéité, dans la région d'une entretoise de plaque d'étanchéité (64) est plus petite que dans d'autres régions de plaque d'étanchéité adjacentes aux orifices de passage de gaz chaud (56, 58), et **en ce que** la plaque d'étanchéité (54) présente au moins une couche d'étanchéité (50) également dans la région de cette entretoise de plaque d'étanchéité.

18. Système d'étanchéité selon la revendication 17, **caractérisée par** un joint plat selon l'une quelconque des revendications 2 à 16.

19. Système d'étanchéité selon la revendication 17 comportant un joint plat selon la revendication 5, **caractérisé en ce que** l'entretoise de composant (226) affectée à l'entretoise de couche d'étanchéité (266) ayant une section essentiellement en forme de V ou en forme de U, reposant sur le côté ouvert de l'entretoise de couche d'étanchéité et présentant une face avant dirigée vers cette dernière, a une section, transversalement au sens longitudinal de l'entretoise de composant, qui se rétrécit en direction de la face d'étanchéité du composant de telle sorte que la face avant de l'entretoise de composant plaque sur le fond (268) de la section en forme de V ou en forme de U de l'entretoise de couche d'étanchéité.
